# EUROPEAN PATENT APPLICATION

(11) **EP 2 693 089 A1**
(43) Date of publication of application: **05.02.2014**
(21) Application number: 12765069.5
(22) Date of filing: 29.02.2012
(51) Int. Cl.: F16J 15/32

(54) **SEALING DEVICE AND SEALING STRUCTURE**

(30) Priority: 31.03.2011 JP 2011078099
(71) Applicant: Eagle Industry Co., Ltd., Minato-ku Tokyo 105-8587 (JP)
(72) Inventor: NAKAZONO Yusaku, Tokyo 105-8587 (JP); ITADANI Masatoshi, Tokyo 105-8587 (JP); TOKUNAGA Yuichiro, Tokyo 105-8587 (JP)
(74) Representative: TBK
(86) International application number: PCT/JP2012/055087
(87) International publication number: WO 2012/132731

(57) **Abstract**

A sealing device and a sealing structure in which sliding ability is stabilized are provided. A lip tip of a first seal lip (120) includes a first tapered surface (123a) which expands in diameter toward a sealed fluid side (L) and a second tapered surface (123b) which expands in diameter toward an opposite side (A) of the sealed fluid side, the second tapered surface (123b) is provided with a plurality of screw thread protrusions (or screw thread grooves) (124) which move grease (170) in the axial direction while rotating relative to a rotary shaft (21), and each of the plurality of screw thread protrusions (or screw thread grooves) (124) is disposed so as to move the grease (170) toward the opposite side (A) of the sealed fluid side.

## Description

### Technical Field

The present invention relates to a sealing device and a sealing structure to seal an annular gap between a shaft and a housing rotating relative to each other.

### Background Art

Conventionally, there is known a sealing device including two seal lips sliding on a shaft and a grease filled in between the two seal lips so as to improve the sliding ability of the seal lip at a sealed fluid side (see Patent Literature 1).

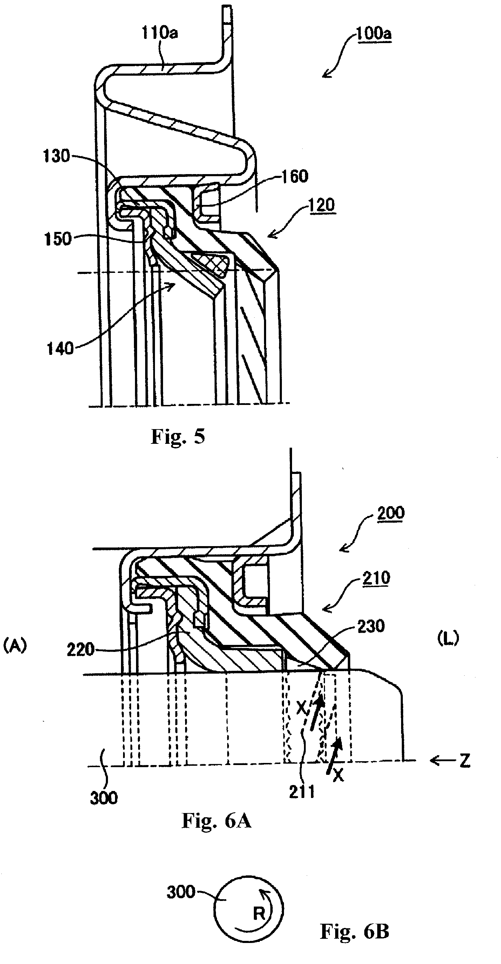

Referring to Fig. 6A and Fig. 6B, a sealing device according to the conventional example will be described. Fig. 6A is a schematic cross-sectional view illustrating a usage state of a sealing device according to the conventional example. Further, Fig. 6B illustrates a rotation direction (the arrow R in the drawing) of a rotary shaft when seen in the Z direction in Fig. 6A. A sealing device 200 includes a rubber-made first seal lip 210 which is provided at a sealed fluid side (L) and a resin-made second seal lip 220 which is provided at an opposite side (A) of the sealed fluid side. Then, grease 230 is filled in between the first seal lip 210 and the second seal lip 220 in order to improve the sliding ability of the first seal lip 210 with respect to a shaft 300.

Further, a tapered surface at the opposite side (A) of the sealed fluid side in relation to the lip tip of the first seal lip 210 is provided with screw thread protrusions (or screw thread grooves) 211 that exhibit a screw pump function. Accordingly, when the first seal lip 210 and the shaft 300 rotate relative to each other, the sealed fluid leaking to the opposite side (A) of the sealed fluid side in relation to the lip tip due to the sliding between the lip tip and the surface of the shaft 300 can be returned to the sealed fluid side (L).

However, in the conventional example, the grease 230 also moves to the sealed fluid side (L) by the screw pump effect of the screw thread protrusions (or screw thread grooves) 211 (see the arrow X in the drawing). Thus, the sliding ability of the first seal lip 210 may be degraded. Hence, an abnormal noise (squeaking) may occur when the first seal lip 210 slides on the surface of the shaft 300 and a sliding abrasionmaybe precipitated. Consequently, the durability of the sealing device is also degraded.

### Citation List

### Patent Literature

Patent Literature 1: JP 10-73165 A

### Summary of Invention

### Technical Problem

It is an obj ect of the invention to provide a sealing device and a sealing structure in which sliding ability is stabilized.

### Solution to Problem

The invention adopts the following means in order to solve the above-described problems.

That is, in the sealing device of the present invention to seal an annular gap between a shaft and a housing rotating relative to each other, the sealing device comprising:
a first seal lip which slides on a surface of the shaft;
a second seal lip which is provided at the opposite side of a sealed fluid side in relation to the first seal lip and slides on the surface of the shaft; and
a grease which is filled in between the first seal lip and the second seal lip,
wherein a lip tip of the first seal lip includes a first tapered surface which expands in diameter toward the sealed fluid side and a second tapered surface which expands in diameter toward the opposite side of the sealed fluid side, and
wherein the second tapered surface is provided with a plurality of screw thread protrusions or screw thread grooves which move the grease in the axial direction while rotating relative to the shaft, and each of the plurality of screw thread protrusions or screw thread grooves is disposed so as to move the grease toward the opposite side of the sealed fluid side.

Further, in the sealing structure of the present invention that includes:
a housing which has a shaft hole;
a shaft which is inserted into the shaft hole and rotates relative to the housing; and
a sealing device to seal an annular gap between the shaft and the housing,
wherein the sealing device includes
a first seal lip which slides on a surface of the shaft;
a second seal lip which is provided at the opposite side of a sealed fluid side in relation to the first seal lip and slides on the surface of the shaft; and
a grease which is filled in between the first seal lip and the second seal lip,
wherein a lip tip of the first seal lip includes a first tapered surface which expands in diameter toward the sealed fluid side and a second tapered surface which expands in diameter toward the opposite side of the sealed fluid side, and
wherein the second tapered surface is provided with a plurality of screw thread protrusions or screw thread grooves which move the grease in the axial direction while rotating relative to the shaft, and each of the plurality of screw thread protrusions or screw thread grooves is disposed so as to move the grease toward the opposite side of the sealed fluid side.

According to these inventions, the screw thread protrusions or the screw thread grooves can exhibit the function to move the grease toward the opposite side of the sealed fluid side in relation to the lip tip of the first seal lip. Thus, it is possible to suppress leaking of the grease to the sealed fluid side. Accordingly, it is possible to stablymaintain a state where the grease is filled in between the first seal lip and the second seal lip and hence to maintain the sliding ability of the first seal lip for a long period of time.

Further, the plurality of screw thread protrusions or screw thread grooves are preferably provided up to a position of reaching an edge portion between the first tapered surface and the second tapered surface of the lip tip of the first seal lip.

Accordingly, it is possible to exhibit a function (a screw pump function) to move the grease toward the opposite side of the sealed fluid side from the initial stage where the screw thread protrusions and the like are not abraded due to sliding.

### Advantageous Effects of Invention

As described above, according to the present invention, the sliding ability can be stabilized.

### Brief Description of Drawings

Fig. 1 is a schematic cross-sectional view illustrating an application example of a sealing device according to an example of the present invention.
Fig. 2 is a schematic cross-sectional view of a sealing device according to Example 1 of the present invention.
Fig. 3A is a schematic cross-sectional view illustrating a usage state of the sealing device according to Example 1 of the present invention.
Figs. 4A to 4D are process diagrams illustrating an assembling procedure of the sealing device according to Example 1 of the present invention.
Fig. 5 is a schematic cross-sectional view of a sealing device according to Example 2 of the present invention.
Fig. 6A is a schematic cross-sectional view illustrating a usage state of a sealing device according to the conventional example.

### Description of Embodiments

Hereinafter, a mode for carrying out this invention will be exemplarily described in detail with reference to the drawings. Note that, the dimensions, the materials, the shapes, the relative arrangements, and the like of the constituents described in the embodiments do not limit the scope of the invention unless otherwise specified.

### (Example 1)

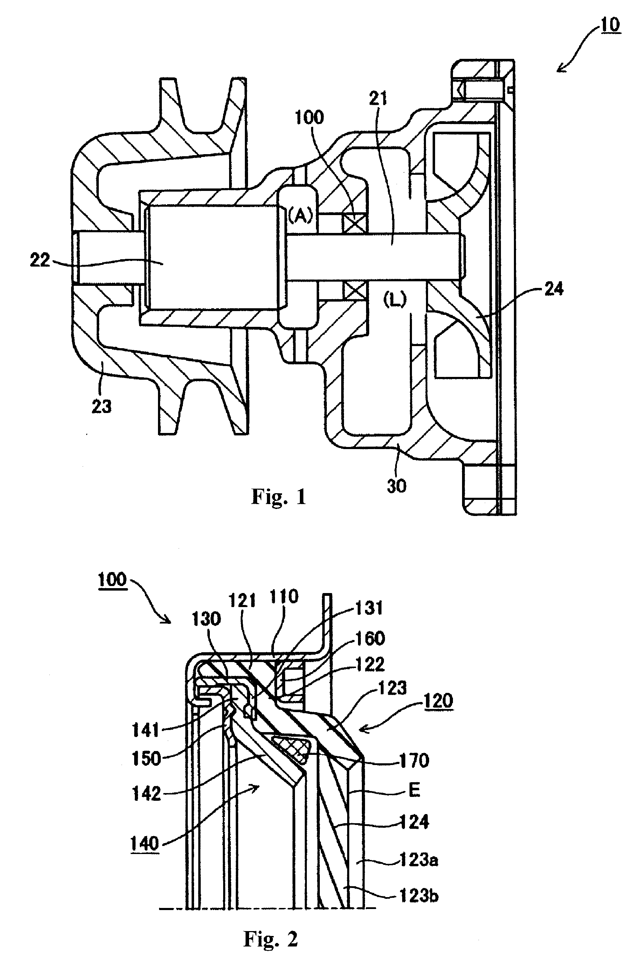

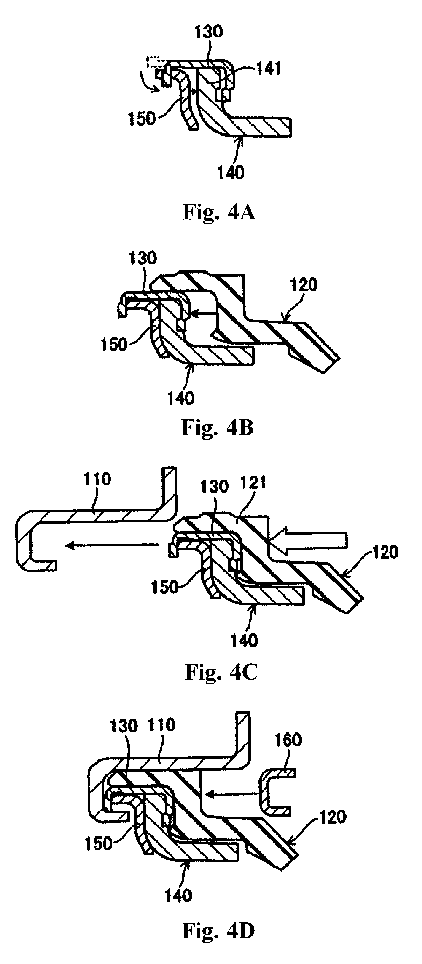

Referring to Figs. 1 to 4D, a sealing device according to Example 1 of the present invention will be described.

### <Application example of sealing device>

Referring to Fig. 1, an application example of a sealing device 100 according to this Example of the present invention will be described. Fig. 1 is a schematic cross-sectional view of a water pump 10 for a vehicle. The water pump 10 includes a rotary shaft 21 and a housing 30 having a shaft hole into which the rotary shaft 21 is inserted. Abearing 22 which smoothens the rotation of the rotary shaft 21 is mounted to the rotary shaft 21. Further, a pulley 23 which receives a rotational driving force by a belt or the like (not illustrated) is mounted to one end side of the rotary shaft 21, and an impeller 24 which pressure-feeds cooling water (LLC) is mounted to the other end side thereof. Then, the sealing device 100 according to this Example is disposed in an annular gap between the rotary shaft 21 and the housing 30 so as to suppress the leaking of the cooling water to the outside (that is, the opposite side (A) of the sealed fluid side (L)). Namely, in this Example, the sealed fluid is cooling water.

### <Configuration of sealing device>

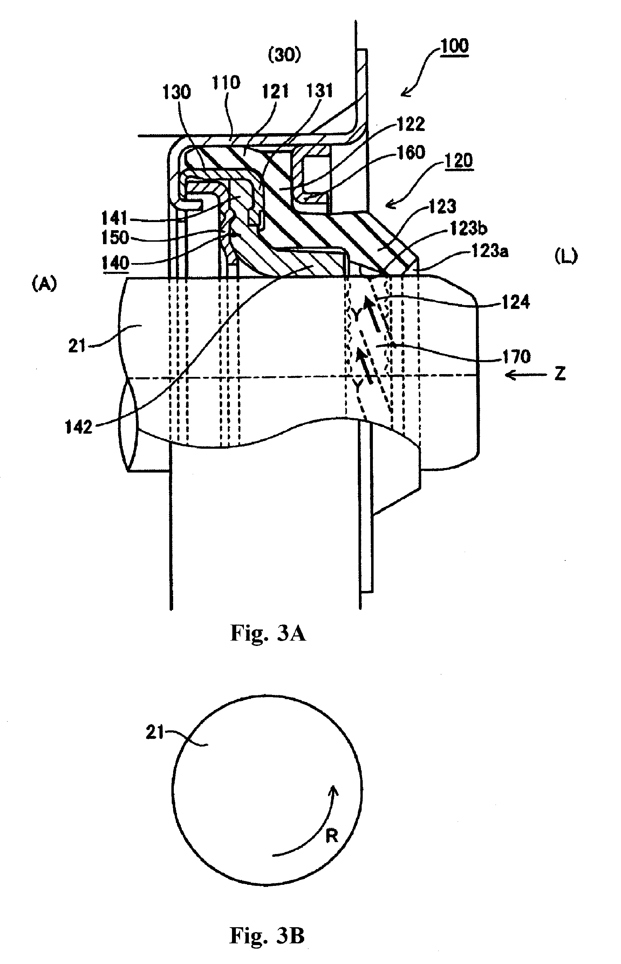

Referring to Figs. 2 to 3B, the sealing device 100 according to this Example of the present invention will be described. Here, Figs. 2 and 3A are cross-sectional views obtained by cutting the plane passing through the center of the rotary shaft 21, Fig. 2 illustrates a cross section of the sealing device 100 itself, and Fig. 3A illustrates a cross section in a usage state of the sealing device 100. Fig. 3B illustrates the rotation direction (indicated by the arrow R in the drawing) of the rotary shaft when seen from the Z direction in Fig. 3A. Note that, the sealing device 100 has a rotationally symmetric shape.

The sealing device 100 includes a metal-made cartridge 110, a rubber-made first seal lip 120, a metal-made casing 130, a synthetic resin-made second seal lip 140, a metal-made backup ring 150, a metal-made adapter 160, and a grease 170 as lubricant.

The cartridge 110 is formed as an annular member, and is fitted to the inner peripheral surface of the shaft hole of the housing 30. The first seal lip 120 includes a substantially cylindrical fixed portion 121, an inward portion 122 which extends inward from the end portion of the fixed portion 121, and a lip portion 123 which extends from the inner tip of the inwardportion 122 toward the sealed fluid side (L) and is further configured to be directed inward. The annular casing 130 is fitted into the fixed portion 121 of the first seal lip 120. Accordingly, the fixed portion 121 is sandwiched between the outer peripheral surface of the casing 130 and the inner peripheral surface of the cartridge 110, thereby positioning the first seal lip 120 in the radial direction with respect to the cartridge 110.

The second seal lip 140 includes a plate-like fixed portion 141 and a lip portion 142 which is configured to be directed further inward from the inner tip of the fixed portion 141 and to be directed toward the sealed fluid side (L). The annular backup ring 150 is provided at the opposite side (A) of the sealed fluid side of the second seal lip 140. Accordingly, the fixed portion 141 of the second seal lip 140 is sandwiched between the backup ring 150 and an inward flange portion 131 of the casing 130, thereby fixing the second seal lip 140 to the cartridge 110.

Then, the annular adapter 160 is provided at the sealed fluid side (L) of the fixed portion 121 of the first seal lip 120. Accordingly, the first seal lip 120 is also positioned in the axial direction with respect to the cartridge 110.

Further, the grease 170 is filled in a spatial region which is formed between the first seal lip 120 and the second seal lip 140 (see Fig. 2). Here, the filling amount of the grease 170 is set to an amount to fill up a space formed between the first seal lip 120 and the second seal lip 140 when the rotary shaft 21 is mounted to the sealing device 100 (the state illustrated in Fig. 3A) with the grease 170.

Here, particularly, an assembling procedure of the sealing device 100 will be described by referring to Figs. 4A to 4D. First, the fixed portion 141 of the second seal lip 140 is placed in the casing 130. Subsequently, the backup ring 150 is fitted (see Fig. 4A). Next, the left end portion of the casing 130 in the drawings is bent inward (see the arrow in the drawings). Then, the first seal lip 120 is placed onto this integrated combination of the casing 130, the second seal lip 140, and the backup ring 150 (see Fig. 4B). Subsequently, the integrated combination of these is press-inserted in the axial direction along the inner peripheral surface of the cartridge 110, and the fixed portion 121 of the first seal lip 120 is fitted to the inner peripheral surface of the cartridge 110 (see Fig. 4C). Then, the adapter 160 is press-inserted into the inner peripheral surface of the cartridge 110. In this state, the grease 170 is filled into a spatial region formed between the first seal lip 120 and the second seal lip 140.

With the above-described configuration, each of the above-described members is integrally formed into one cartridge. That is, the sealing device 100 including the cartridge 110, the first seal lip 120, the casing 130, the second seal lip 140, the backup ring 150, the adapter 160, and the grease 170 can be handled as a single part.

Then, in the sealing device 100 according to this Example, the tip of the lip portion 123 of the first seal lip 120 is configured to include a first tapered surface 123a which expands toward the sealed fluid side (L) and a second tapered surface 123b which expands toward the opposite side (A) of the sealed fluid side. Note that, an edge portion E is formed between the first tapered surface 123a and the second tapered surface 123b.

Further, the second tapered surface 123b is provided with a plurality of screw thread protrusions (or screw thread grooves) 124 which move the grease 170 in the axial direction while rotating relative to the rotary shaft 21. Then, each of the plurality of screw thread protrusions 124 is disposed so as to move the grease 170 toward the opposite side (A) of the sealed fluid side. That is, when the rotary shaft 21 rotates (see Fig. 3B), the lip portion 123 slides on the surface of the rotary shaft 21, and the grease 170 moves toward the opposite side (A) of the sealed fluid side in relation to the edge portion E of the tip of the lip portion 123 due to the screw pump effect of the screw thread protrusions 124 (see the arrows Y of Fig. 3A). Here, from the opposite side (A) of the sealed fluid side on the second tapered surface 123b, the screw thread protrusions 124 are provided up to the position of reaching the edge portion E of the tip of the lip portion 123. Accordingly, it is possible to exhibit the function (the screw pump function) to move the grease 170 toward the opposite side (A) of the sealed fluid side from the initial stage where the screw thread protrusions 124 are not abraded due to sliding.

### <Advantage of sealing device 100 of this Example>

According to the sealing device 100 of this Example, it is possible to exhibit the function to move the grease 170 toward the opposite side (A) of the sealed fluid side in relation to the tip of the lip portion 123 of the first seal lip 120 by the screw thread protrusions (or the screw thread grooves) 124. For this reason, it is possible to suppress the leaking of the grease 170 to the sealed fluid side (L). Accordingly, it is possible to stably maintain a state where the grease 170 is filled in between the first seal lip 120 and the second seal lip 140 and hence to maintain the sliding ability of the first seal lip 120 for a long period of time. Consequently, it is possible to suppress the occurrence of abnormal noise (squeaking) and to improve the durability of the sealing device 100 due to a decrease in sliding abrasion.

Further, since a coat of the grease 170 is stably formed between the first seal lip 120 and the surface of the rotary shaft 21, it is possible to effectively suppress the leaking of the cooling water (LLC), namely the sealed fluid, toward the opposite side (A) of the sealed fluid side. Further, for this reason, even when the screw thread protrusions (or the screw thread grooves) 124 that exhibit the function to move a fluid toward the opposite side (A) of the sealed fluid side are provided, the leaking of the cooling water is not precipitated.

### (Example 2)

Fig. 5 illustrates Example 2 of the present invention. In this Example, a modified example of the cartridge of Example 1 will be described. Since the other configurations and effects are the same as those of the Example 1, the same reference numerals will be given to the same constituents, and the description thereof will not be repeated.

The annular gap to be sealed by the sealing device may be larger depending on the relation between the diameter of the shaft (the rotary shaft 21) and the diameter of the shaft hole of the housing 30. For this reason, in a sealing device 100a according to this Example, the cartridge 110a is provided with an S-shaped cross-sectional portion so as to have elasticity in the radial direction, and hence exhibits a sufficient sealing performance without degrading the attaching ability with respect to a large annular gap. Since the configurations other than the cartridge 110a are the same as those of Example 1, the description thereof will not be repeated.

### (Others)

In above-described Examples, a case has been described in which the present invention is used in the water pump 10 for the vehicle as an application example of the sealing device, but the present invention may be applied to various devices that need to seal an annular gap between a shaft and a housing rotating relative to each other. In particular, the present invention can be appropriately used as a sealing device or a sealing structure to seal a shaft hole of devices for home appliances or industrial water pumps with small load.

### Reference Signs List

- 10:: WATER PUMP
- 21:: ROTARY SHAFT
- 22:: BEARING
- 23:: PULLEY
- 24:: IMPELLER
- 30:: HOUSING
- 100, 100a:: SEALING DEVICE
- 110, 110a:: CARTRIDGE
- 120:: FIRST SEAL LIP
- 121:: FIXED PORTION
- 122:: INWARD PORTION
- 123:: LIP PORTION
- 123a:: FIRST TAPERED SURFACE
- 123b:: SECOND TAPERED SURFACE
- 124:: SCREW THREAD PROTRUSION
- 130:: CASING
- 131:: INWARD FLANGE PORTION
- 140:: SECOND SEAL LIP
- 141:: FIXED PORTION
- 142:: LIP PORTION
- 150:: BACKUP RING
- 160:: ADAPTER
- 170:: GREASE

## Claims

1. A sealing device to seal an annular gap between a shaft and a housing rotating relative to each other, the sealing device comprising:
a first seal lip which slides on a surface of the shaft;
a second seal lip which is provided at the opposite side of a sealed fluid side in relation to the first seal lip and slides on the surface of the shaft; and
a grease which is filled in between the first seal lip and the second seal lip,
wherein a lip tip of the first seal lip includes a first tapered surface which expands in diameter toward the sealed fluid side and a second tapered surface which expands in diameter toward the opposite side of the sealed fluid side, and
wherein the second tapered surface is provided with a plurality of screw thread protrusions or screw thread grooves which move the grease in the axial direction while rotating relative to the shaft, and each of the plurality of screw thread protrusions or screw thread grooves is disposed so as to move the grease toward the opposite side of the sealed fluid side.

2. The sealing device according to claim 1,
wherein the plurality of screw thread protrusions or screw thread grooves are provided up to a position of reaching an edge portion between the first tapered surface and the second tapered surface of the lip tip of the first seal lip.

3. A sealing structure comprising:
a housing which has a shaft hole;
a shaft which is inserted into the shaft hole and rotates relative to the housing; and
a sealing device to seal an annular gap between the shaft and the housing,
wherein the sealing device includes
a first seal lip which slides on a surface of the shaft;
a second seal lip which is provided at the opposite side of a sealed fluid side in relation to the first seal lip and slides on the surface of the shaft; and
a grease which is filled in between the first seal lip and the second seal lip,
wherein a lip tip of the first seal lip includes a first tapered surface which expands in diameter toward the sealed fluid side and a second tapered surface which expands in diameter toward the opposite side of the sealed fluid side, and
wherein the second tapered surface is provided with a plurality of screw thread protrusions or screw thread grooves which move the grease in the axial direction while rotating relative to the shaft, and each of the plurality of screw thread protrusions or screw thread grooves is disposed so as to move the grease toward the opposite side of the sealed fluid side.
